# EUROPÄISCHE PATENTSCHRIFT

(11) **EP 0 588 285 B1**
(45) Veröffentlichungstag und Bekanntmachung des Hinweises auf die Patenterteilung: **30.07.1997**
(21) Anmeldenummer: 93114689.8
(22) Anmeldetag: 13.09.1993
(51) Int. Cl.: B62J 9/00, B62J 11/00

(54) **Anordnung eines Zweiradschlosses an einem Fahrzeugrahmen und Zweiradkoffer zur Aufnahme des Zweiradschlosses**
Arrangement of a lock for a two-wheeled vehicle on the vehicle frame and a container for the lock
Disposition d'un cadenas pour un véhicule à deux roues dans un coffre attaché sur le cadre dudit véhicule

(30) Priorität: 16.09.1992 DE 4230996
(43) Veröffentlichungstag der Anmeldung: 23.03.1994
(73) Patentinhaber: Aug. Winkhaus GmbH & Co. KG, D-48291 Telgte (DE)
(72) Erfinder: Kortenbrede, Ludger, D-48291 Telgte (DE); Stuft, Bernd, D-48161 Münster-Roxel (DE)
(74) Vertreter: Weickmann, Heinrich, Dipl.-Ing.

(56) Entgegenhaltungen:
- EP-A- 0 079 798
- EP-A- 0 337 552
- EP-A- 0 492 742
- DE-U- 9 007 222

## Beschreibung

Die Erfindung betrifft einen Zweiradkoffer mit Befestigungsmitteln zum Anbringen an einem Zweirad, dieser Zweiradkoffer umfassend eine Halterung für ein Zweiradschloß.

Aus der deutschen Gebrauchsmusterschrift 80 21 709 ist die Verbindung eines Sicherungskabels für ein Zweiradschloß mit einem Zweiradkoffer bekannt. Dabei ist das Sicherungskabel mit einem Ende innerhalb des Zweiradkoffers fixiert. Das andere Ende kann zwischen Bodenteil und Deckelteil des Zweiradkoffers eingeklemmt werden, wobei zum Gebrauch des Sicherungskabels dieses auf dem größten Teil seiner Länge außerhalb des Zweiradkoffers verläuft, während beim Fahren das Sicherungskabel innerhalb des Zweiradkoffers untergebracht ist. Dabei ist die Lage des Sicherungsseils innerhalb des Koffers undefiniert und stellt sich entsprechend der inneren Seilspannung des Sicherungskabels ein. Dies ist unpraktisch, wenn in dem Koffer noch andere Utensilien untergebracht werden sollen, da die Gefahr besteht, daß diese beim Öffnen des Zweiradkoffers durch Entspannung des Schließkabels aus dem Stauraum herausgeworfen werden. Überdies ist es auch aus Gründen der Verschmutzung unpraktisch, wenn das Schließkabel durch eine undefinierte Lage innerhalb des Zweiradkoffers mit anderem Inhalt in Berührung kommt.

Aus der EP-A-0 337 552 ist es bekannt, auf einer Grundkonstruktion eines Gepäckträgers einen U-Bügel aufzulagern, der einerseits als vergrößerte Auflagefläche des Gepäckträgers und andererseits als Langbügel eines Langbügelschlosses verwendet werden kann, wenn es gilt, das Fahrrad nach Abnahme des Gepäcks abzuschließen. Der in Form eines Steckbolzens ausgebildete Schloßkörper wird dabei im Falle der Verwendung des U-Bügels als Gepäckauflage durch Steckösen des U-Bügels und außerdem durch ein Steckrohr des Fahrradrahmens hindurchgesteckt, um den U-Bügel an den freien Schenkelenden am Fahrradrahmen zu sichern, während der U-Bügel anderen Ends im Bereich seines Querschenkels auf einer Stützfläche der Grundkonstruktion des Gepäckträgers aufliegt.

Nach einer anderen Ausführungsform der gleichen Entgegenhaltung wird eine scherenartige Stützkonstruktion des Gepäckträgers beim Abstellen des Fahrrads abgenommen und in Verbindung mit einem Steckbolzen, der im Fahrbetrieb der Festlegung der nabennahen Enden der Scherenkonstruktion am Fahrradrahmen dient, zum Fahrradschloß ergänzt.

In einer dritten Ausführungsform der gleichen Entgegenhaltung dient ein Langbügelschloß als Hilfsmittel zum Festlegen eines Fahrradkoffers an einem Fahrradrahmen, wobei das Langbügelschloß außerhalb des Fahrradkoffers zwischen diesem und dem Zweiradrahmen zu liegen kommt.

Aus der EP-A-0 492 742 ist es bekannt, ein Langbügelschloß an einem Zweirad im Bereich des Gepäckträgers dadurch für den Mitführbetrieb zu fixieren, daß die vom Schloßkörper befreiten Langbügelschenkel mit ihren freien Enden voraus in Aufnahmen des Zweiradrahmens der Gepäckträgerkonstruktion eingeschoben werden und daß der Schloßkörper dann an dem Zweiradrahmen bzw. der Gepäckträgerkonstruktion im Bereich des Stegs des Langbügels festgelegt wird, so daß durch den formschlüssigen Eingriff zwischen Steg und Schloßkörper ein Ausziehen der Langbügelschenkel aus ihren Aufnahmen unterbunden ist.

Der Erfindung liegt die Aufgabe zugrunde, ein Zweiradschloß innerhalb eines Zweiradkoffers in definierter Lage so anzuordnen, daß es jederzeit leicht greifbar ist, unabhängig davon, ob noch andere Gepäckteile in dem Koffer untergebracht sind. Weiter soll verhindert werden, daß das Zweiradschloß innerhalb des Stauraums in größerem Umfange Berührung mit sonstigen Gepäckteilen eingeht.

Zur Lösung dieser Aufgabe wird für einen Zweiradkoffer der eingangs bezeichneten Art, beispielsweise bekannt aus der DE-U-8 021 709, vorgeschlagen, daß die Halterung für das Zweiradschloß innerhalb des durch den Koffer gebildeten Stauraums, angrenzend an eine im Anbauzustand des Zweiradkoffers an einem Zweirad obere Begrenzungswand angeordnet ist.

Eine bevorzugte Ausführungsform des Zweiradkoffers sieht vor, daß dieser zur seitlichen Anbringung am Zweiradrahmen neben dessen Hinterrad ausgebildet ist. Auf diese Weise wird im Gegensatz zu der eingangs behandelten bekannten Lösung die Möglichkeit eines Stauraums erheblicher Höhenausdehnung geschaffen, in dem das nahe der oberen Begrenzungswand angebrachte Zweiradschloß optimalen Zugriff ermöglicht und minimale Kontaktmöglichkeit mit sonstigen Gepäckstücken hat.

Eine verbreitete Bauform von Zweiradkoffern, bei der die Anwendung des Erfindungsvorschlags sich als besonders vorteilhaft erweist, sieht vor, daß der Koffer von zwei Kofferschalen gebildet ist, welche im Bereich einer unteren Begrenzungswand durch eine fahrtrichtungsparallele Gelenkachse gelenkig miteinander verbunden sind, wobei eine erste Kofferschale zur Befestigung an dem Zweiradrahmen ausgebildet und eine zweite Kofferschale von der ersten Kofferschale um die Gelenkachse aus einer Schließstellung in eine Öffnungsstellung abklappbar ist. Dabei kann die Halterung im Bereich einer oberen Begrenzungswand der zweiten Kofferschale oder vorzugsweise der ersten Kofferschale angeordnet sein.

Die Ergonomie des Einführens und Entnehmens eines Zweiradschlosses hängt von der Form der Einhüllenden des Schlosses ab. Wenn das Zweiradschloß oder ein die überwiegende Raumausdehnung des Zweiradschlosses bestimmender Bestandteil desselben als flache, längliche Raumscheibe ausgebildet ist, so bildet man den Zweiradkoffer mit seiner Halterung bevorzugt so aus, daß diese Raumscheibe in einer räumlichen Orientierung mit im wesentlichen horizontaler Querachse und im wesentlichen horizontaler zur Fahrtrichtung paralleler Längsachse in die erste Kofferschale längs einer Bewegungsrichtung einführbar ist, welche im wesentlichen senkrecht zu einer Hochachse der ersten Kofferschale und im wesentlichen senkrecht zur Fahrtrichtung ist. Durch diese Maßnahme wird es in besonderem Maße möglich, das Zweiradschloß auch dann, wenn der Koffer bereits weitgehend gefüllt ist, ohne Umpackmaßnahmen des bereits im Koffer enthaltenen Füllguts einzuführen und wieder herauszunehmen, ohne daß die Gefahr eines Kontaktes mit Füllgut besteht, abgesehen von einer deckwandnahen oberen Schicht, die aber leicht durch eine ggf. integrierte Abdeckung geschützt werden kann.

Ein bevorzugtes Zweiradschloß für hochwertige Fahrräder und insbesondere auch Motorräder ist das sogenannte Langbügelschloß. Im Falle eines solchen Langbügelschlosses kann die Halterung je eine Auflagereinrichtung für die beiden Langbügelschenkel des Langbügels aufweisen. Ergonomisch für die Einführung und Entnahme des Schlosses ist es dabei günstig, wenn die beiden Langbügelschenkel des Langbügels auf der jeweiligen Auflagereinrichtung im Zuge der Einführungsbewegung frei auflagerbar und danach durch eine Sicherung an einer der Auflagereinrichtungen feststellbar sind.

Es besteht die Forderung, daß das Zweiradschloß innerhalb des Koffers möglichst unbeweglich festgelegt ist. Im Falle eines Langbügelschlosses kann dies dadurch erreicht werden, daß bei Zuordnung der Sicherung zu einer der Auflagereinrichtungen die jeweils andere Auflagereinrichtung derart rinnenförmig ausgebildet ist, daß nach Anlegen der Sicherung an den auf der einen Auflagereinrichtung auflagernden Langbügelschenkel der zur anderen Auflagereinrichtung gehörende Langbügelschenkel gegen Drehung um die Achse des durch die Sicherung erfaßten Langbügelschenkels als Folge des Eingriffs in die Rinnenform gesichert ist.

Insbesondere bei Motorrädern ist es unvermeidlich, daß Langbügelschlösser eine erhebliche Bügellänge aufweisen. Um diese Langbügelschlösser dann gleichwohl innerhalb des Koffers und etwa parallel zu dessen Deckwand unterbringen zu können, erweist es sich manchmal als vorteilhaft, wenn man Langbügel und Schloßkörper getrennt in dem Stauraum unterbringt. Dies ergibt die Möglichkeit, daß der Schloßkörper an der Halterung in solcher Lage feststellbar ist, daß er als Sicherung für den einen Langbügelschenkel auf der ihm zugehörigen Auflagereinrichtung dient. Dabei kann die Halterung mit Eingriffszapfen von den Eingriffsenden der Langbügelschenkel entsprechender Form ausgeführt sein und der Schloßkörper kann gewünschtenfalls auf diesen Eingriffszapfen vermittels seiner zum Zusammenschluß mit den Langbügelschenkelenden ausgebildeten Schließmechanik fixiert sein. Dies bringt den zusätzlichen Vorteil, daß im Fall eines nicht verschlossenen Koffers das Zweiradschloß trotzdem gegen Diebsahl gesichert ist.

Gleichgültig, ob mit oder ohne Schloßkörper festgelegt, kann der Langbügel in seiner Längsrichtung durch Anschläge an Kofferwandteilen festgelegt sein.

Im Hinblick auf eine einfache Fertigung des Koffers und insbesondere auch im Hinblick auf eine mögliche Nachrüstung bereits ausgelieferter Koffer wird empfohlen, daß die Auflagereinrichtungen und die Sicherung an einem gemeinsamen Halterungsträger angeordnet sind. Dabei kann der Halterungsträger an dem Zweiradkoffer durch Befestigungsmittel, wie Schrauben, festgelegt sein.

Im Hinblick auf die Nachrüstung ist dabei eine Ausführung besonders interessant, die mit einem möglichst geringen Aufwand an kofferdurchdringenden Befestigungsmitteln eingebaut werden kann, unter Umständen nur durch elastischen Formschluß mit Teilen der Kofferwandung.

Bei einem Verfahren zum Einsetzen eines Langbügelschlosses in eine Halterung innerhalb eines Zweiradkoffers kann in der Weise vorgegangen werden, daß der Schloßkörper nach Auflegen der Langbügelschenkel auf je eine Auflagerung dadurch gesichert wird, daß der Schloßkörper vermittels der ihm zugeordneten gesonderten Halterungsmittel in der Nähe des einen Langbügelschenkels, diesen gegen Abnahme von seiner Auflagerung sichernd, angebracht wird, wobei der andere Langbügelschenkel in der ihm zugeordneten rinnenförmigen Auflagerung formschlüssig festgehalten und damit ein Verschwenken dieses anderen Langbügelschenkels um den einen Langbügelschenkel verhindert wird.

Die beiliegenden Figuren erläutern die Erfindung anhand eines Ausführungsbeispiels; es stellen dar:
- Figur 1: einen Querschnitt durch einen Zweiradkoffer in einer zur Fahrtrichtung orthogonalen Schnittebene;
- Figur 2: eine Ansicht auf eine fahrzeugseitige Kofferschale bei einem seitlich neben dem Hinterrad anzubringenden Koffer mit einem Teil der radfernen Kofferschale;

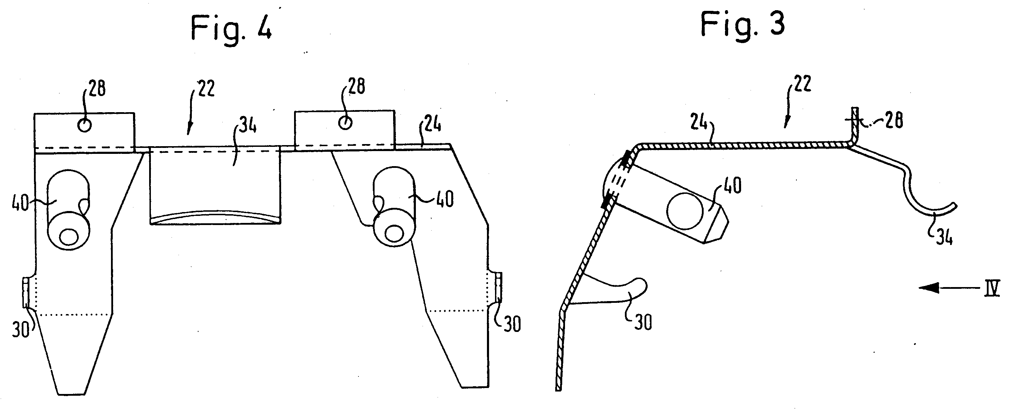

- Figur 3: einen Schnitt durch eine Schloßhalterung entsprechend der Anordnung in Figur 1 und
- Figur 4: eine Ansicht der Halterung in Pfeilrichtung IV der Figur 3.

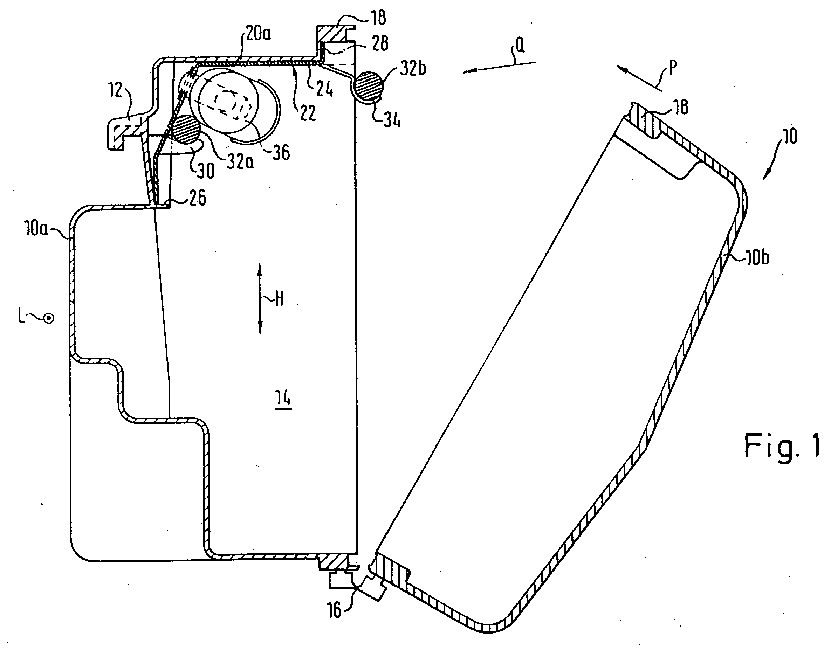

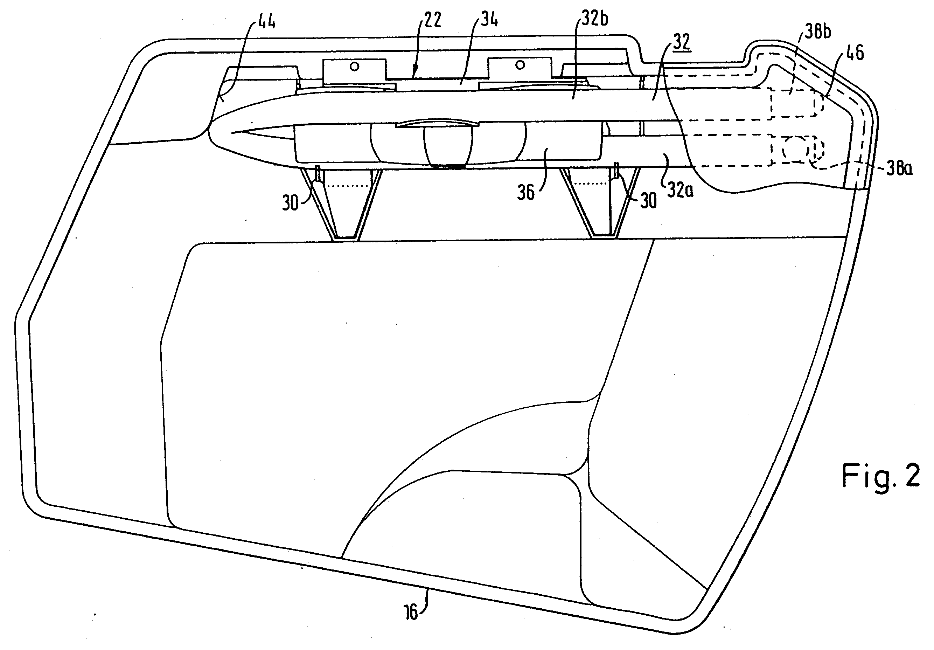

In Figur 1 ist ein Zweiradkörper ganz allgemein mit 10 bezeichnet. Er besteht aus einer ersten Kofferschale 10a und einer zweiten Kofferschale 10b. Die erste Kofferschale 10a ist zur seitlichen Anbringung neben dem Hinterrad eines Fahrrads oder Motorrads mit einem Befestigungshaken 12 und weiteren nicht dargestellten Befestigungsmitteln ausgeführt. Die Fahrtrichtung ist durch eine zur Zeichenebene senkrechte Linie L angedeutet. Die Hochachse des innerhalb des Koffers gebildeten Stauraums 14 ist mit H angedeutet. Die zweite Kofferschale 10b ist durch ein Scharnier 16 mit der ersten Kofferschale 10a verbunden, wobei sich das Scharnier parallel zur Fahrtrichtung erstreckt. In Figur 1 ist der Koffer geöffnet. Die zweite Kofferschale 10b kann in Pfeilrichtung P an die erste Kofferschale 10a beigeklappt und mit dieser verrastet und ggf. durch Schließmittel 18 verschlossen werden. An der Deckwand 20a der ersten Kofferschale 10a ist eine Halterung 22 für ein Langbügelschloß angeordnet. Diese Halterung umfaßt ein Winkelprofil 24, das an einer Rippe 26 der Kofferschale 10 aufsteht und durch eine Verschraubung 28 gesichert ist. Das Winkelprofil erstreckt sich in Richtung der Linie L und trägt in Richtung der Linie L beabstandete Auflagerelemente 30 für den einen Langbügelschenkel 32a eines Langbügels 32 (siehe Figur 2) sowie an mittlerer Stelle zwischen den beiden Auflagerelementen 30 ein rinnenförmiges Auflagerelement 34 für den anderen Langbügelschenkel 32b. Der Langbügel 32 wird in die Auflagerelemente 30 und die Auf lagerrinne im wesentlichen in Pfeilrichtung Q mit zur Pfeilrichtung Q paralleler Querachse und zur Fahrtrichtung L paralleler Längsachse eingeführt und zum Abschluß der Einführungsbewegungen abgelegt. Um den Langbügel nunmehr gegen unbeabsichtigte Bewegung zu sichern, wird der von dem Langbügel 32 getrennte Schloßkörper 36, welcher zum Zusammenstecken und Verriegeln mit Endabschnitten 38a,38b der Langbügelschenkel 32a,32b ausgebildet ist, auf Zapfen 40 aufgesteckt, die entsprechend den Endabschnitten 38a,38b geformt sind.

Ist der Schloßkörper auf die Zapfen 40 einmal aufgesteckt und auf diesen gesichert, so sichert er, wie aus Figur 1 zu ersehen, den Langbügelschenkel 32a gegen Verlassen der Auflagerelemente 30. Dank der Rinnenform der Auflagerrinne 34 ist gleichzeitig der Langbügelschenkel 32b gegen ein Schwenken um die Achse des Langbügelschenkels 32a gesichert. In Längsrichtung ist der Langbügel 32, wie aus Figur 2 ersichtlich, durch Anschlagflächen 44 und 46 an der Kofferschale 10a festgelegt.

Man erkennt, daß der Stauraum 14 durch die Unterbringung des Schlosses im Bereich der oberen Begrenzungswand 20a praktisch nicht eingeschränkt wird und daß eine Einführung und eine Entnahme des Schlosses möglich ist, ohne den etwaigen Inhalt des Koffers 10 zu manipulieren.

Im Vorstehenden wurde ein Ausführungsbeispiel beschrieben, bei welchem das Schloß in der Nähe der oberen Wand der Kofferschale 10a angeordnet ist. Dies ist insofern eine bevorzugte Ausführungsform, als man durch Anbringung des häufig schweren Schlosses nur diejenige Kofferschale 10a belastet, die unmittelbar am Fahrzeug angebracht wird, die Scharniere bei 16 aber entlastet und ebenso etwaige Vorrichtungen zur Begrenzung der Öffnungsbewegung. Gleichwohl soll nicht ausgeschlossen sein, daß das Schloß auch an der zweiten Kofferschale 10b angebracht werden kann, wobei dann bevorzugt die Anbringung wieder in deren oberem Bereich erfolgt, um den Vorteil zu erhalten, daß beim Griff nach dem Schloß möglichst wenig Gepäck vorher entnommen werden muß.

Es wurde vorstehend weiter davon ausgegangen, daß die Halterung des Schloßbügels im Bereich der Bügelschenkel 32a und 32b erfolgt. Auch dies ist keine Notwendigkeit. Es soll durchaus im Rahmen der Erfindung liegen, daß der Schloßbügel etwa an den freien Schenkelenden einerseits und im Bereich des Scheitels andererseits zunächst einmal festgelegt wird und dann durch den Schloßkörper in seiner so erreichten Lage fixiert werden kann, wobei der Schloßkörper dann auch mit dem Scheitelbereich zusammenwirken kann.

Schließlich soll auch folgende Möglichkeit erfaßt werden: Man kann sich vorstellen, daß die Zapfen 40 nicht am Koffer selbst sondern am Fahrzeug angebracht werden, an welchem der Koffer angebracht werden soll. Man kann dann beim Anbau des Koffers an dem Fahrzeugrahmen die Zapfen 40 oder entsprechende Elemente durch Öffnungen in den Kofferraum einführen und dann den Schloßkörper wieder an diesen Zapfen festmachen und ggf. verriegeln. Auf diese Weise kann man sich des Schloßkörpers bedienen, um während der Fahrt eine zusätzliche Sicherung gegen Lösung des Koffers vom Fahrzeugrahmen zu ermöglichen. Dies kann dazu führen, daß die Befestigung des Koffers an dem Rahmen einfacher und deshalb leichter lösbar und wiederherstellbar ausgebildet werden kann.

Diese Lösung wirft das Problem auf, daß dann an der Zapfendurchtrittsstelle der Koffer eine witterungsgefährdete Öffnung haben muß. Dieses Problem kann aber beispielsweise durch elastische Dichtmittel ausgeräumt werden, die so beschaffen sind, daß sie ein Durchstecken der Zapfen zulassen und sich dann dicht an die Zapfen anlegen, wobei diese Dichtmittel sogar so ausgestaltet sein können, daß sie am abgenommenen Koffer eine Form annehmen, welche dichten Abschluß gewährleistet.

Es sei abschließend noch darauf hinzuweisen, daß die Halterung für das Schloß innerhalb des Koffers in Anpassung an verschiedene Kofferformen durchaus anders ausgebildet sein kann als in den beiliegenden Zeichnungen dargestellt. Handelt es sich um einen Koffer, welcher nicht in einer vertikalen Ebene geteilt ist, wie dargestellt, sondern um einen Koffer, der in einer annähernd horizontalen Ebene geteilt ist und als Oberteil einen Deckel aufweist, so wird man die Halterungsmittel für das Schloß bevorzugt an der Innenseite des Deckels anbringen. Auch dann lassen sich die Feststellmaßnahmen verwirklichen, die vorstehend für den Fall eines Bügelschlosses beschrieben worden sind.

## Patentansprüche

1. Zweiradkoffer mit Befestigungsmitteln zum Anbringen an einem Zweirad, dieser Zweiradkoffer umfassend eine Halterung (22) für ein Zweiradschloß (32,36),
dadurch gekennzeichnet,
daß die Halterung (22) für das Zweiradschloß (32,36) innerhalb des durch den Koffer (10) gebildeten Stauraums (14), angrenzend an eine im Anbauzustand des Zweiradkoffers an einem Zweirad obere Begrenzungswand (20a) angeordnet ist.

2. Zweiradkoffer nach Anspruch 1,
**dadurch gekennzeichnet**,
daß er zur seitlichen Anbringung am Zweiradrahmen neben dem Hinterrad ausgebildet ist.

3. Zweiradkoffer nach Anspruch 2,
**dadurch gekennzeichnet**,
daß er von zwei Kofferschalen (10a,10b) gebildet ist, welche im Bereich einer unteren Begrenzungswand durch eine fahrtrichtungsparallele Gelenkachse (16) gelenkig miteinander verbunden sind, wobei eine erste Kofferschale (10a) zur Befestigung an dem Zweiradrahmen ausgebildet (bei 12) und eine zweite Kofferschale (10b) von der ersten Kofferschale (10a) um die Gelenkachse (16) aus einer Schließstellung in eine Öffnungsstellung abklappbar ist.

4. Zweiradkoffer nach einem der Ansprüche 2 bis 3,
**dadurch gekennzeichnet**,
daß die Halterung (22) im Bereich einer oberen Begrenzungswand (20a) der zweiten Kofferschale (10b) oder vorzugsweise der ersten Kofferschale (10a) angeordnet ist.

5. Zweiradkoffer nach Anspruch 4,
**dadurch gekennzeichnet**,
daß bei Ausbildung des Zweiradschlosses (32,36) oder eines die überwiegende Raumausdehnung des Zweiradschlosses bestimmenden Bestandteils (32a) desselben als flache längliche Raumscheibe, diese Raumscheibe in einer räumlichen Orientierung mit im wesentlichen horizontaler Querachse und im wesentlichen horizontaler zur Fahrtrichtung paralleler Längsachse in die erste Kofferschale (10a) längs einer Bewegungsrichtung (Q) einführbar ist, welche im wesentlichen senkrecht zu einer Hochachse (H) der ersten Kofferschale (10a) und im wesentlichen senkrecht zur Fahrtrichtung (L) ist.

6. Zweiradkoffer nach einem der Ansprüche 1 bis 5,
**dadurch gekennzeichnet**,
daß bei Ausführung des Zweiradschlosses (32,36) als Langbügelschloß die Halterung (22) je eine Auflagereinrichtung (30,34) für die beiden Langbügelschenkel (32a, 32b) des Langbügels aufweist.

7. Zweiradkoffer nach Anspruch 6,
**dadurch gekennzeichnet**,
daß die beiden Langbügelschenkel (32a,32b) des Langbügels auf der jeweiligen Auflagereinrichtung (30,34) im Zuge der Einführungsbewegung (Q) frei auflagerbar und danach durch eine Sicherung (36) an einer (30) der Auflagereinrichtungen (30,34) feststellbar sind.

8. Zweiradkoffer nach Anspruch 7,
**dadurch gekennzeichnet**,
daß bei Zuordnung der Sicherung (36) zu einer (30) der Auflagereinrichtungen (30,34) die jeweils andere Auflagereinrichtung (34) derart rinnenförmig ausgebildet ist, daß nach Anlegen der Sicherung (36) an den auf der einen Auflagereinrichtung (30) auflagernden Langbügelschenkel (32a) der zur anderen Auflagereinrichtung (34) gehörende Langbügelschenkel (23b) gegen Drehung um die Achse des durch die Sicherung (36) erfaßten Langbügelschenkels (32a) als Folge des Eingriffs in die Rinnenform (34) gesichert ist.

9. Zweiradkoffer nach einem der Ansprüche 6 bis 8,
**dadurch gekennzeichnet**,
daß der Langbügel (32) losgelöst vom Schloßkörper (36) in die Auflagereinrichtungen (30,34) einlegbar ist und daß der Schloßkörper (36) als getrenntes Teil an der Halterung (22) feststellbar ist.

10. Zweiradkoffer nach Anspruch 9,
**dadurch gekennzeichnet**,
daß der Schloßkörper (36) an der Halterung (22) in solcher Lage feststellbar ist, daß er als Sicherung für mindestens einen Langbügelschenkel (32a) auf der ihm zugehörigen Auflagereinrichtung (30) dient.

11. Zweiradkoffer nach Anspruch 10,
**dadurch gekennzeichnet**,
daß die Halterung (22) mit Eingriffszapfen (40) von den Eingriffsenden (38a,38b) der Langbügelschenkel (32a,32b) entsprechender Form ausgeführt ist und daß gewünschtenfalls der Schloßkörper (36) auf diesen Eingriffszapfen (40) vermittels seiner zum Zusammenschluß mit den Langbügelschenkelenden (38a,38b) ausgebildeten Schließmechanik fixiert ist.

12. Zweiradkoffer nach einem der Ansprüche 9 bis 11,
**dadurch gekennzeichnet**,
daß der Langbügel (32) in seiner Längsrichtung durch Anschläge (44,46) an Kofferwandteilen festgelegt ist.

13. Zweiradkoffer nach einem der Ansprüche 6 bis 12,
**dadurch gekennzeichnet**,
daß die Auflagereinrichtungen (30,34) und die Sicherung (36) an einem gemeinsamen Halterungsträger (22) angeordnet sind.

14. Zweiradkoffer nach Anspruch 13,
**dadurch gekennzeichnet**,
daß der Halterungsträger (22) an dem Zweiradkoffer (10) durch Formschlußeingriff (bei 26) und ggf. durch Befestigungsmittel (28), wie Schrauben, festgelegt ist.

15. Verfahren zum Einsetzen eines Langbügelschlosses (32,36) in eine Halterung (22) innerhalb eines Zweiradkoffers (10) nach einem der Ansprüche 1 - 14,
**dadurch gekennzeichnet**,
daß der Schloßkörper (36) nach Auflegen der Langbügelschenkel (32a,32b) auf je eine Auflagerung (30,34) dadurch gesichert wird, daß der Schloßkörper (36) vermittels der ihm zugeordneten gesonderten Halterungsmittel (40) in der Nähe des einen Langbügelschenkels (32a), diesen gegen Abnahme von seiner Auflagerung (30) sichernd, angebracht wird, wobei der andere Langbügelschenkel (32b) in der ihm zugeordneten rinnenförmigen Auflagerung (34) formschlüssig festgehalten und damit ein Verschwenken dieses anderen Langbügelschenkels (32b) um den einen Langbügelschenkel (32a) verhindert wird.

## Claims

1. A bicycle pannier with fastening means for attaching it to a bicycle, said bicycle pannier comprising a holding device (22) for a bicycle lock (32, 36), characterised in that the holding device (22) for the bicycle lock (32, 36) is arranged inside the stowage space (14) formed by the pannier (10), whereby it adjoins a defining wall (20a) which is at the top when the bicycle pannier is mounted on a bicycle.

2. A bicycle pannier according to claim 1, characterised in that it is constructed for lateral attachment to the bicycle frame in the vicinity of the rear wheel.

3. A bicycle pannier according to claim 2, characterised in that it is formed of two pannier shells (10a, 10b) which are connected together articulatedly in the region of a lower defining wall by an articulated shaft (16) parallel with the direction of travel, a first pannier shell (10a) being constructed (at 12) for attachment to the bicycle frame and a second pannier shell (10b) folding down from the first pannier shell (10a) about the articulated shaft (16) from a closed position into an open position.

4. A bicycle pannier according to either one of claims 2 or 3, characterised in that the holding device (22) is arranged in the area of an upper defining wall (20a) of the second pannier shell (10b) or preferably of the first pannier shell (10a).

5. A bicycle pannier according to claim 4, characterised in that, if the bicycle lock (32, 36) or a component (32a) thereof defining the majority of the spatial extent of the bicycle lock is constructed as a flat, elongate three-dimensional piece, this three-dimensional piece may be inserted into the first pannier shell (10a) in a direction of movement (Q) in spatial orientation with a substantially horizontal transverse axis and a substantially horizontal longitudinal axis parallel with the direction of travel which is substantially perpendicular to a vertical axis (H) of the first pannier shell (10a) and substantially perpendicular to the direction of travel (L).

6. A bicycle pannier according to any one of claims 1 to 5, characterised in that, if the bicycle lock (32, 36) is constructed as an elongate shackle lock, the holding device (22) comprises a supporting device (30, 34) for each of the two legs (32a, 32b) of the elongate shackle.

7. A bicycle pannier according to claim 6, characterised in that the two legs (32a, 32b) of the elongate shackle may be freely supported on the respective supporting device (30, 34) in the course of the insertion movement (Q) and may thereafter be fixed by a security device (36) on one (30) of the supporting devices (30, 34).

8. A bicycle pannier according to claim 7, characterised in that, if the security device (36) is associated with one (30) of the supporting devices (30, 34), the other supporting device (34) is of groove-type construction, such that, after the security device (36) has been positioned on the elongate shackle leg (32a) supported on the one supporting device (30), the elongate shackle leg (32b) associated with the other supporting device (34) is secured against rotation about the axis of the elongate shackle leg (32a) gripped by the security device (36) as a result of engagement in the groove shape (34).

9. A bicycle pannier according to any one of claims 6 to 8, characterised in that the elongate shackle (32) may be inserted into the supporting devices (30, 34) while released from the lock body (36) and in that the lock body (36) may be fixed to the holding device (22) as a separate part.

10. A bicycle pannier according to claim 9, characterised in that the lock body (36) may be fixed to the holding (22) in such a position that it serves as a security device for at least one elongate shackle leg (32a) on the supporting device (30) associated therewith.

11. A bicycle pannier according to claim 10, characterised in that the holding device (22) is constructed with engagement studs (40) corresponding in form to the engagement ends (38a, 38b) of the elongate shackle legs (32a, 32b) and in that, if desired, the lock body (36) is fixed to these engagement studs (40) by means of its lock mechanism constructed to interlock with the elongate shackle leg ends (38a, 38b).

12. A bicycle pannier according to any one of claims 9 to 11, characterised in that the elongate shackle (32) is fixed in its longitudinal direction by limit stops (44, 46) on pannier wall parts.

13. A bicycle pannier according to any one of claims 6 to 12, characterised in that the supporting devices (30, 34) and the security device (36) are arranged on a common holding support (22).

14. A bicycle pannier according to claim 13, characterised in that the holding support (22) is fixed to the bicycle pannier (10) by positive engagement (at 26) and optionally by fastening means (28), such as screws.

15. A method of inserting an elongate shackle lock (32, 36) into a holding device (22) inside a bicycle pannier (10) according to any one of claims 1 to 14, characterised in that, after positioning of the elongate shackle legs (32a, 32b) on their respective supporting devices (30, 34), in that the lock body (36) is attached by means of the separate holding means (40) associated therewith in the vicinity of the one elongate shackle leg (32a), so as to secure the latter against removal from its supporting device (30), the other elongate shackle leg (32b) being fixed positively in the groove-type supporting device (34) associated therewith and swivelling of this other elongate shackle leg (32b) about the one elongate shackle leg (32a) thereby being prevented.

## Revendications

1. Coffre pour deux-roues avec des moyens de fixation pour l'installation sur un deux-roues, ce coffre pour deux-roues comprenant une fixation (22) pour une serrure de deux-roues (32, 36), caractérisé
en ce que la fixation (22) pour la serrure de deux-roues (32, 36) est placée à l'intérieur du volume de rangement (14), formé par le coffre (10), à la limite d'une paroi de délimitation (20a) supérieure, à l'état monté du coffre pour deux-roues sur un deux-roues.

2. Coffre pour deux-roues selon la revendication 1,
caractérisé
en ce qu'il est conformé pour une fixation latérale sur le cadre du deux-roues, à côté de la roue arrière.

3. Coffre pour deux-roues selon la revendication 2,
caractérisé
en ce qu'il est formé de deux coques (10a, 10b), qui sont assemblées entre elles de manière articulée dans la zone d'une paroi de délimitation inférieure, par un axe d'articulation (16) parallèle à la direction de marche, une première coque (10a) du coffre étant conformée (en 12) pour la fixation sur le cadre du deux-roues et une seconde coque (10b) du coffre pouvant être rabattue de la première coque (10a), autour de l'axe d'articulation (16), d'une position de fermeture dans une position d'ouverture.

4. Coffre pour deux-roues selon l'une des revendications 2 à 3,
caractérisé
en ce que la fixation (22) est prévue dans la zone d'une paroi de délimitation (20a) supérieure de la seconde coque (10b) ou de préférence de la première coque (10a).

5. Coffre pour deux-roues selon la revendication 4,
caractérisé
en ce que dans le cas où la serrure de deux-roues (32, 36) ou vu élément constitutif (32a) de celle-ci, déterminant l'extension dominante dans l'espace de la serrure de deux-roues, est conformé en disque spatial plat, allongé, ce disque spatial, dans une orientation spatiale, avec axe transversal sensiblement horizontal et axe longitudinal sensiblement horizontal, parallèle à la direction de marche, peut être introduit dans la première coque (10a) du coffre, le long d'une direction de déplacement (Q), qui est sensiblement perpendiculaire à un axe vertical (H) de la première coque (10a) et sensiblement perpendiculaire à la direction de marche (L).

6. Coffre pour deux-roues selon l'une des revendications 1 à 5,
caractérisé
en ce que dans le cas où la serrure de deux-roues (32, 36) est réalisée en tant que serrure à étrier long, la fixation (22) présente un dispositif de support (30, 34) pour chacune des deux branches (32a, 32b) de l'étrier long.

7. Coffre pour deux-roues selon la revendication 6,
caractérisé
en ce que les deux branches (32a, 32b) de l'étrier long peuvent reposer librement sur le dispositif de support (30, 34) respectif au cours du mouvement d'introduction (Q) et peuvent ensuite être fixées, par une sûreté (36), sur l'un (30) des dispositifs de support (30, 34).

8. Coffre pour deux-roues selon la revendication 7,
caractérisé
en ce que dans le cas où la sûreté (36) est affectée à l'un (30) des dispositifs de support (30, 34), l'autre dispositif de support (34) est en forme de goulotte, de manière qu'après application de la sûreté (36) contre la branche (32) de l'étrier long, reposant sur un dispositif de support (30), la branche (23b) de l'étrier long, faisant partie de l'autre dispositif de support (34), est bloquée contre une rotation autour de l'axe de la branche (32a) de l'étrier long, concernée par la sûreté (36), en conséquence de l'engagement dans la forme en goulotte (34).

9. Coffre pour deux-roues selon l'une des revendications 6 à 8,
caractérisé
en ce que l'étrier long (32), détaché du corps de serrure (36), peut être placé à l'intérieur des dispositifs de support (30, 34) et en ce que le corps de serrure (36) peut être fixé en tant qu'élément séparé sur la fixation (22).

10. Coffre pour deux-roues selon la revendication 9,
caractérisé
en ce que le corps de serrure (36) peut être fixé sur la fixation (22) dans une position telle qu'il sert de sûreté pour au moins une branche (32a) de l'étrier long sur le dispositif de support (30) dont il fait partie.

11. Coffre pour deux-roues selon la revendication 10,
caractérisé
en ce que la fixation (22) est réalisée avec des tenons d'engagement (40) d'une forme correspondant aux extrémités d'engagement (38a, 38b) des branches (32a, 32b) de l'étrier long et en ce que, si on le souhaite, le corps de serrure (36) est fixé sur ces tenons d'engagement (40), au moyen de son mécanisme de fermeture conçu pour l'assemblage avec les extrémités (38a, 38b) des branches de l'étrier long.

12. Coffre pour deux-roues selon l'une des revendications 9 à 11,
caractérisé
en ce que l'étrier long (32) est fixé dans sa direction longitudinale par des butées (44, 46) sur des parties de la paroi du coffre.

13. Coffre pour deux-roues selon l'une des revendications 6 à 12,
caractérisé
en ce que les dispositifs de support (30, 34) et la sûreté (36) sont placés sur un porte-fixation (22) commun.

14. Coffre pour deux-roues selon la revendication 13,
caractérisé
en ce que le porte-fixation (22) est fixé sur le coffre pour deux-roues (10) par engagement par concordance de forme (en 26) et éventuellement par des moyens de fixation (28), tels que des vis.

15. Procédé d'insertion d'une serrure à étrier long (32, 36) dans une fixation (22), à l'intérieur d'un coffre pour deux-roues (10) selon l'une des revendications 1 à 14,
caractérisé
en ce qu'après mise en place des branches (32a, 32b) de l'étrier long chacune sur un support (30, 34), le corps de serrure (36) est bloqué en ce que le corps de serrure (36) est placé, à l'aide des moyens de fixation (40) spéciaux, qui lui sont affectés, à proximité d'une branche (32a) de l'étrier long, en bloquant celle-ci contre un enlèvement de son support (30), l'autre branche (32b) de l'étrier long étant fixée par concordance de forme dans le support (34) en forme de goulotte qui lui est affecté, et ainsi un pivotement de cette autre branche (32b) de l'étrier long autour d'une branche (32a) de l'étrier long est empêché.
